# FASCICULE DE BREVET EUROPEEN

(11) **EP 4 543 803 B1**
(45) Date de publication et mention de la délivrance du brevet: **06.05.2026**
(21) Numéro de dépôt: 23744854.3
(22) Date de dépôt: 23.06.2023
(51) Int. Cl.: C01B 21/16, C07C 241/02

(54) **PROCEDE DE PREPARATION D'HYDRATE D'HYDRAZINE UTILISANT UNE COLONNE D'ABSORPTION**
VERFAHREN ZUR HERSTELLUNG VON HYDRAZINHYDRAT UNTER VERWENDUNG EINER ABSORPTIONSKOLONNE
METHOD FOR PREPARING HYDRAZINE HYDRATE USING AN ABSORPTION COLUMN

(30) Priorité: 24.06.2022 FR 2206298
(43) Date de publication de la demande: 30.04.2025
(73) Titulaire: ARKEMA FRANCE, 92800 Puteaux (FR)
(72) Inventeur: SAGE, Jean-Marc, 69491 Pierre-Bénite (FR); HENRARD, Valérie, 69 491 Pierre-Bénite (FR)
(74) Mandataire: Bandpay & Greuter
(86) Numéro de dépôt international: PCT/FR2023/050949
(87) Numéro de publication internationale: WO 2023/247908

(56) Documents cités:
- FR-A1- 2 817 863
- FR-A1- 3 096 048

## Description

La présente invention concerne un procédé de préparation d'hydrate d'hydrazine à partir d'une azine d'alkylcétone obtenue en présence d'une cétone par oxydation de l'ammoniac par du peroxyde d'hydrogène, en présence d'un activateur.

L'hydrazine est utilisée dans diverses applications, principalement dans la désoxygénation des eaux de chaudières (par exemple des centrales nucléaires) et sert à la préparation de dérivés pharmaceutiques et agrochimiques.

Il existe donc un besoin industriel pour la préparation d'hydrate d'hydrazine.

La production industrielle d'hydrate d'hydrazine se fait selon les procédés RASCHIG, BAYER ou à partir de peroxyde d'hydrogène.

Dans le procédé RASCHIG, on oxyde l'ammoniac par un hypochlorite pour obtenir une solution diluée d'hydrate d'hydrazine qu'il faut ensuite concentrer par distillation. Ce procédé peu sélectif, peu productif et très polluant n'est presque plus utilisé.

Le procédé BAYER est une amélioration du procédé RASCHIG, qui consiste à déplacer un équilibre chimique en piégeant, à l'aide d'acétone, l'hydrazine formée sous forme d'azine de formule suivante :

(CH₃)₂C=N-N=C-(CH₃)₂.

L'azine est ensuite isolée puis hydrolysée en hydrate d'hydrazine. Les rendements sont améliorés, mais il n'y a pas d'amélioration quant aux rejets dans l'environnement.

Le procédé à l'eau oxygénée consiste à oxyder un mélange d'ammoniac et d'une cétone par du peroxyde d'hydrogène en présence d'un moyen d'activation de l'eau oxygénée pour synthétiser directement l'azine, qu'il suffit ensuite d'hydrolyser en hydrate d'hydrazine. Les rendements sont élevés et le procédé est moins polluant. Ce procédé à l'eau oxygénée est décrit dans de nombreux brevets, par exemple US 3 972 878, US 3 972 876 et US 4 093 656.

Ces procédés sont aussi décrits dans ULLMANN'S ENCYCLOPEDIA OF INDUSTRIAL CHEMISTRY (1989), vol A 13, pages 180-183 et les références incluses.

Dans les procédés à l'eau oxygénée, l'ammoniac est oxydé par le peroxyde d'hydrogène en présence d'une cétone et d'un moyen d'activation du peroxyde d'hydrogène selon la réaction globale suivante, en formant une azine :

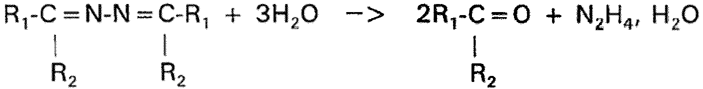

Cette hydrolyse est effectuée en réalité en deux temps, avec formation d'une hydra-zone intermédiaire :

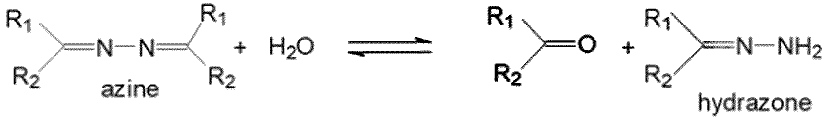

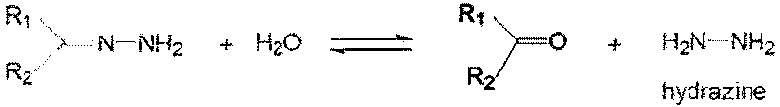

La réaction de formation de l'azine est relativement complexe, car elle met en jeu trois phases : une phase gazeuse avec l'ammoniac, une phase organique avec la cétone et une phase aqueuse avec l'activateur et le peroxyde d'hydrogène. La méthyléthylcétone est avantageusement utilisée, car l'azine de la méthyléthylcétone est soluble en phase organique et peu soluble dans le milieu aqueux. Elle est donc facilement récupérable en fin de réaction et séparable par une simple décantation. Cette azine présente également l'avantage d'être très stable, surtout en milieu alcalin, c'est-à-dire dans le milieu réactionnel ammoniacal

Dans les procédés actuels, cette azine est ensuite purifiée, puis hydrolysée dans une colonne de distillation réactive pour libérer *in fine* de la méthyléthylcétone en tête, qui peut être recyclée, et surtout une solution aqueuse d'hydrate d'hydrazine en pied. Celui-ci doit contenir aussi peu de produits carbonés que possible comme impuretés et doit être incolore.

Un procédé de préparation efficace d'hydrate d'hydrazine est connu du document WO 2020/229773.

Le document FR2817863 divulgue un procédé de fabrication d'hydrazine en solution aqueuse, comprenant les étapes suivantes: a) dans un milieu réactionnel, on prépare de la 2, 2, 4, 4-tétraméthyl-3-pentanone azine par couplage oxydant de la 2, 2, 4, 4-tétraméthyl-3-pentanone imine en présence d'un système catalytique et d'oxygène comme oxydant, d) on hydrolyse la 2, 2, 4, 4-tétraméthyl-3-pentanone azine pour obtenir de l'hydrazine en solution aqueuse et de la 2, 2, 4, 4-tétraméthyl-3-pentanone sous forme d'une phase organique.

Il est connu de l'article scientifique « Agitation effects in a gas-liquid-liquid reactor system : methyl ethyl ketazine production » de R. Kaur et K.D.P.Nigam dans la revue International Journal of Chemical Reactor Engineering, de janvier 2007, que l'agitation est un facteur d'amélioration déterminant. En effet, pour que la réaction soit efficace, il est nécessaire que les réactifs entrent en contact les uns avec les autres, c'est-à-dire l'ammoniac en phase gaz, le peroxyde d'hydrogène et l'activateur en phase aqueuse et la cétone en phase organique. Le rendement de cette réaction est directement lié aux échanges et aux contacts entre les différentes phases. La publication pré-citée étudie le rendement de la réaction en fonction de la vitesse d'agitation du milieu réactionnel et en fonction du nombre de phases présentes dans le réacteur.

Il est observé que plus la vitesse d'agitation est élevée, plus le rendement augmente jusqu'à une valeur seuil de 600 t/m. Toutefois, ces expériences ont été menées sur un réacteur semi-batch. Or, ce procédé est difficilement transposable sur des unités industrielles, c'est-à-dire sur des volumes plus importants. Une agitation de 600 t/m appliquée à des réacteurs de volumes industriels représente une consommation énergétique importante. Ce niveau d'agitation est difficilement réalisable, lorsque le procédé est appliqué à des quantités industrielles.

Par conséquent, des solutions sont encore recherchées pour rendre ces contacts gaz-liquide-liquide efficaces, avec un rendement satisfaisant, une consommation énergétique raisonnable et une installation simple, au sein d'un procédé industriel.

Ce problème technique a été résolu par un procédé de mélange des différentes phases en deux étapes. Tout d'abord, l'ammoniac gazeux est solubilisé dans la phase aqueuse à l'aide d'une colonne d'absorption, puis cette phase aqueuse ammoniacale est mélangée à la phase organique dans un réacteur agité conventionnel.

Cette solution permet d'utiliser un réacteur biphasique liquide-liquide usuel, avec un niveau d'agitation lui aussi usuel. Il a été observé que même à un niveau d'agitation très faible, de très bons rendements étaient obtenus.

### Brève description de la figure

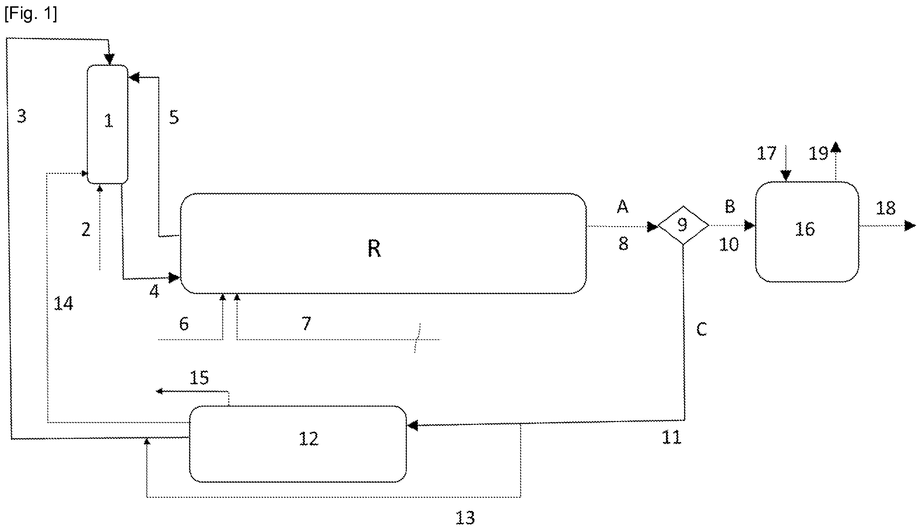

La figure 1 est un schéma du dispositif mettant en œuvre le procédé revendiqué.

### Brève description de l'invention

Ainsi, la présente invention a pour objet un procédé de préparation d'hydrate d'hydrazine, comprenant les étapes successives suivantes :
a) préparation au moyen d'une colonne d'absorption d'une solution aqueuse comprenant de l'ammoniac solubilisé en une proportion comprise entre 50% et 100% par rapport à la saturation de l'ammoniac dans de l'eau pure à la température de la colonne et comportant au moins un activateur, par introduction dans la colonne d'absorption d'une solution aqueuse comprenant au moins un activateur et d'ammoniac frais puis
b) réaction au sein d'au moins un réacteur de la solution aqueuse d'ammoniac comportant au moins un activateur obtenue à l'étape précédente avec du peroxyde d'hydrogène et une cétone de formule R₁R₂CO, les groupes R₁ et R₂ désignant indépendamment l'un de l'autre un groupe méthyle, éthyle, propyle, butyle, pentyle, hexyle, heptyle et octyle, puis
c) séparation de la phase organique contenant l'azine de la phase aqueuse à partir du flux formé à l'issu de l'étape précédente, puis
d) hydrolyse de la phase organique obtenue à l'étape précédente pour obtenir de l'hydrate d'hydrazine.

### Description détaillée de l'invention

D'autres caractéristiques, aspects, objets et avantages de la présente invention apparaîtront encore plus clairement à la lecture de la description qui suit.

Il est précisé que les expressions « de ...à ... » et « compris entre ... et .... » utilisées dans la présente description doivent s'entendre comme incluant chacune des bornes mentionnées.

### Préparation de la solution aqueuse

Une solution aqueuse ammoniacale est préparée à l'aide d'une colonne d'absorption.

La colonne d'absorption est alimentée en ammoniac frais et en une solution aqueuse contenant au moins un activateur.

La colonne d'absorption vise à solubiliser l'ammoniac gazeux dans la solution aqueuse contenant au moins un activateur. La colonne d'absorption a pour fonction de rendre monophasique ce mélange d'ammoniac gazeux et de solution aqueuse comprenant un activateur.

En sortie de colonne d'absorption, une solution aqueuse comprenant de l'ammoniac solubilisé en une proportion comprise entre 50% et 100% par rapport à la saturation de l'ammoniac dans de l'eau pure à la température de la colonne et comportant au moins un activateur est obtenue.

### L'ammoniac solubilisé

La solubilité de l'ammoniac gazeux dans de l'eau pure en fonction de la température est connue du livre Lange's Handbook of Chemistry, Editor Jonh A. Dean, 12e édition, 1979, en page 10.3*.* Cette solubilité est exprimée en poids de gaz dissout dans 100 grammes d'eau à une pression de 760 mm de mercure. Le tableau divulgué en page 10.3 est repris ci-dessous :

**Tableau 1**

| Température (°C) | Quantité en gramme |
|---|---|
| 20 | 52,9 |
| 24 | 48,2 |
| 28 | 44,0 |
| 30 | 41,0 |
| 40 | 31,6 |
| 50 | 23,5 |
| 60 | 16,8 |
| 70 | 11,1 |

Ces valeurs expriment la solubilité maximale de l'ammoniac dans l'eau pure, c'est-à-dire la saturation de l'eau pure par l'ammoniac. Dans le contexte de l'invention, la colonne d'absorption vise à solubiliser l'ammoniac dans la solution aqueuse contenant de l'activateur à un pourcentage compris entre 50% et 100% par rapport à une eau pure saturée à la température de la colonne. Cette solubilité de l'ammoniac dans la phase aqueuse est exprimée par rapport à la quantité d'eau contenue dans la phase aqueuse comprenant au moins un activateur.

En d'autres termes, partant des valeurs divulguées dans le *Lange's Handbook of Chemistry* précité et reprises dans le tableau 1 ci-dessus, à 20°C, une solubilisation d'ammoniac de 26,45g à 52,9g d'ammoniac est visée. A 70°C, une solubilisation de 5,55g à 11,1g d'ammoniac est visée.

De préférence, l'ammoniac est solubilisé dans la solution aqueuse contenant de l'activateur en une proportion comprise entre 50% et 85% par rapport à la saturation de l'ammoniac dans de l'eau pure à la température de la colonne.

Le débit d'ammoniac frais peut varier au cours du procédé afin de maintenir constante la solubilité de l'ammoniac dans la solution aqueuse. Au démarrage du procédé, le débit d'ammoniac devra être suffisant pour atteindre la solubilité de l'ammoniac souhaitée. Ensuite, le débit pourra être diminué de manière à conserver la solubilité souhaitée.

### L'activateur

Par « activateur », on entend un composé permettant d'activer le peroxyde d'hydrogène, c'est-à-dire un composé tel que l'on puisse produire de l'azine à partir d'ammoniac, de peroxyde d'hydrogène et d'une cétone.

Cet activateur peut être choisi parmi les oxyacides organiques ou inorganiques, leurs sels d'ammonium et leurs dérivés : anhydrides, esters, amides, nitriles, peroxydes d'acyle, ou leurs mélanges. Avantageusement, on utilise les amides, les sels d'ammonium et les nitriles.

A titre d'exemple, on peut citer :
(i) des amides d'acides carboxyliques de formule R₅COOH dans laquelle R₅ est l'hydrogène, un radical alkyle linéaire ayant de 1 à 20 atomes de carbone, ou un radical alkyle ramifié ou cyclique ayant de 3 à 12 atomes de carbone, ou un radical phényle pouvant être substitué,
(ii) des amides d'acides polycarboxyliques de formule R₆(COOH)ₙ dans laquelle R₆ représente un radical alkylène ayant de 1 à 10 atomes de carbone et n étant un nombre entier supérieur ou égal à 2, R₆ peut être une simple liaison, alors n vaut 2.

Les radicaux R₅ et R₆ peuvent être substitués par des halogènes, des groupements OH, NO₂ ou méthoxy. On peut citer aussi les amides des acides organiques de l'arsenic. Les acides organiques de l'arsenic sont, par exemple, l'acide méthylarsonic, l'acide phénylarsonic et l'acide cacodylique.

Les amides préférés sont le formamide, l'acétamide, le monochloracétamide et le propionamide, et plus préférentiellement l'acétamide.

Parmi les sels d'ammonium, on utilise avantageusement les sels d'hydracides, d'oxyacides minéraux, d'acides arylsulfoniques, d'acides de formules R₅COOH ou R₆(COOH)ₙ, R₅, R₆ et n étant définis précédemment, des acides organiques de l'arsenic.

Les sels d'ammonium préférés sont le formiate, l'acétate, le monochloracétate, le propionate, le phénylarsonate et le cacodylate.

Parmi les nitriles, on peut citer avantageusement les produits de formule R₇(CN)ₙ, n pouvant varier de 1 à 5 selon la valence de R₇, R₇ est un alkyle cyclique ou non cyclique ayant de 1 à 12 atomes de carbone ou un benzyle ou un groupement pyridinyle. R₇ peut être substitué par des groupements qui ne s'oxydent pas dans le réacteur de l'étape (b), par exemple des halogènes, des groupes carboxyliques, esters carboxyliques, nitro, amine, hydroxy ou acide sulfonique.

Les nitriles préférés sont l'acétonitrile et le propionitrile.

On forme la solution comprenant au moins un activateur en mettant en solution un ou plusieurs produits choisis parmi les oxyacides organiques ou inorganiques, leurs sels d'ammonium et leurs dérivés : anhydrides, esters, amides, nitriles, peroxydes d'acyle, ou leurs mélanges tels que définis ci-dessus. Avantageusement, on utilise les amides, les sels d'ammonium ou les nitriles précédents. De façon particulièrement préférée, on utilise un seul activateur, qui est l'acétamide.

Cette solution est aqueuse. Selon un autre mode de réalisation, ladite solution est une solution aqueuse d'un amide d'acide faible et du sel d'ammonium correspondant à cet acide telle que décrite dans le brevet EP 0 487 160.

Ces amides d'acides faibles sont dérivés des acides carboxyliques correspondants qui ont une constante de dissociation inférieure à 3 x 10⁻³, c'est-à-dire les acides, qui ont un pKa supérieur à 3 en solution aqueuse à 25°C.

Pour les acides polycarboxyliques, ce sont les acides dont la constante de la première ionisation est inférieure à 3 x 10⁻³.

À titre d'exemple, on peut citer les acides carboxyliques de formule R₈COOH dans laquelle R₈ est un radical alkyle linéaire ayant de 1 à 20 atomes de carbone, ou un radical alkyle ramifié ou cyclique ayant de 3 à 12 atomes de carbone, ou un radical phényle pouvant être substitué, des acides polycarboxyliques de formule R₉(COOH)ₙ dans laquelle R₉ représente un radical alkylène ayant de 1 à 10 atomes de carbone et n étant un nombre supérieur ou égal à 2, R₉ peut être une simple liaison alors n vaut 2. Les radicaux R₈ et R₉ peuvent être substitués par des halogènes, des groupements OH, NO₂ ou méthoxy. On utilise de préférence l'acétamide, le propionamide, le n-butyramide ou l'isobutyramide.

Le sel d'ammonium correspondant de l'acétamide est l'acétate d'ammonium.

On ne sortirait pas du cadre de l'invention en formant le sel d'ammonium *in situ* c'est-à-dire en utilisant l'acide carboxylique correspondant qui donne par réaction avec l'ammoniac le sel d'ammonium.

Les proportions de l'amide et du sel d'ammonium correspondant peuvent varier dans de larges limites. On utilise habituellement de 1 à 25 parties du sel d'ammonium pour 5 parties d'amide et de préférence 2 à 10.

### L'Appareillage

La température de la colonne d'absorption peut être comprise entre la température ambiante et 70°C, de préférence entre 20°C et 50°C, et de préférence entre 25°C et 45°C. La pression de la colonne d'absorption peut être comprise entre la pression atmosphérique et jusqu'à environ 10 bars absolus. De préférence, la réaction est menée entre 1 et 5 bars absolus.

La colonne peut être une colonne de distillation à garnissage ou à plateaux.

Il est également possible de récupérer, totalement ou partiellement, le ou les flux d'ammoniac générés par le procédé de préparation de l'azine.

La solution aqueuse contenant au moins un activateur peut être une solution aqueuse recyclée, qui provient de l'étape c) de séparation, qui peut avoir subi, en tout ou en partie une étape de régénération et de concentration.

De préférence, la solution aqueuse comprenant au moins un activateur est introduite en tête de colonne et l'ammoniac frais et/ou l'ammoniac éventuellement recyclé est introduit à contre-courant, de préférence en bas de la colonne. La rencontre de ces flux à contre-courant permet un meilleur mélange des réactifs et une meilleure absorption de l'ammoniac gazeux dans la solution aqueuse.

La solution aqueuse ammoniacale comprenant au moins un activateur est ensuite introduite dans le réacteur, dans lequel est effectué la réaction de formation de l'azine.

### b) Réaction de mélange

La réaction de mélange est effectuée au sein d'au moins un réacteur. La solution aqueuse comportant de l'ammoniac solubilisé en une proportion comprise entre 50% et 100% par rapport à la saturation de l'ammoniac dans de l'eau pure à la température de la colonne et comportant au moins un activateur, obtenue à l'étape précédente, le peroxyde d'hydrogène et la cétone de formule R₁R₂CO, les groupes R₁ et R₂ désignant indépendamment l'un de l'autre un groupe méthyle, éthyle, propyle, butyle, pentyle, hexyle, heptyle et octyle sont introduits dans le réacteur.

### Le peroxyde d'hydrogène

Le peroxyde d'hydrogène peut être utilisé sous sa forme commerciale habituelle, par exemple en solution aqueuse comprenant entre 30 % et 90 % en poids de peroxyde d'oxygène. Avantageusement, on peut ajouter un ou plusieurs stabilisants usuels des solutions peroxydiques, par exemple de l'acide phosphorique, pyrophosphorique, citrique, nitrilo-triacétique, éthylènediaminetétracétique ou les sels d'ammonium ou de métal alcalin de ces acides.

Il est également connu de stabiliser les solutions de peroxyde d'hydrogène en y ajoutant des agents séquestrants qui vont complexer les ions métalliques. On inhibe ainsi la réaction d'oxydo-réduction du peroxyde d'hydrogène.

Des agents séquestrants particulièrement utilisés pour stabiliser les solutions de peroxyde d'hydrogène sont des composés du type comportant des fonctions phosphoniques, sous leur forme acide ou sous leur forme de sel.

Les produits commerciaux suivants peut être utilisés :
- le produit vendu sous la dénomination DEQUEST^{®} 2060 par la société MONSANTO, qui est une solution aqueuse à 50% d'acide d'éthylène triamine penta(méthylène phosphonique),
- le produit commercialisé sous la dénomination DEQUEST^{®} 2041, qui est une solution aqueuse d'acide éthylène diamine tétra(méthylène phosphonique),
- les produits commercialisés sous la dénomination DEQUEST^{®} 2010 et 2006, respectivement une solution aqueuse à 60% d'acide 2-hydroxy éthylène-1,1-diphosphonique et une solution aqueuse à 29% d'acide amino-tris-méthylène phosphonique et 40% de sel pentasodique de cet acide.

Ces acides peuvent être aussi utilisées sous leur forme acide ou bien totalement ou partiellement neutralisée, par exemple sous forme de sel de sodium ou encore sel d'ammonium.

La quantité à utiliser est avantageusement comprise entre 10 et 1000 ppm et, de préférence, entre 50 et 250 ppm de l'ensemble des réactifs et de la solution comprenant au moins un activateur à l'entrée du réacteur.

### L'alkylcétone

L'alkylcétone de formule R₁R₂CO comporte des groupes R₁ et R₂ désignant indépendamment l'un de l'autre un groupe méthyle, éthyle, propyle, butyle, pentyle, hexyle, heptyle et octyle. De préférence, la diméthylcétone et la méthyléthylcétone sont utilisées. De manière particulièrement préférée, la méthyléthylcétone est utilisée. De ce fait, l'azine préférée est l'azine de la méthyléthylcétone, dénommée MECazine.

Les réactifs peuvent être utilisés en quantités stoechiométriques. Cependant, on peut utiliser par mole de peroxyde d'hydrogène de 0,2 à 5 moles et de préférence de 1,5 à 4 moles de cétone ; de 0,1 à 10 moles et de préférence de 1,5 à 4 moles d'ammoniac. La quantité de solution comprenant au moins un activateur peut être comprise entre 0,1 et 2 kg par mole de peroxyde d'hydrogène. Cette quantité dépend de sa qualité, c'est-à-dire de sa force catalytique ou de son activité qui permet de convertir les réactifs en azine. Les proportions des réactifs fixées ci-dessus permettent d'obtenir une conversion maximale, typiquement supérieure à 90%, de préférence supérieure à 95% de peroxyde d'hydrogène et une production d'azine correspondant à plus de 75% de peroxyde d'hydrogène engagée et pouvant atteindre 90 %.

### Les conditions du mélange

La réaction peut se faire dans une très large plage de température, par exemple entre 0°C et 100°C, et on opère avantageusement entre 30°C et 70°C. Bien que l'on puisse opérer à toute pression, il est plus simple d'être à la pression atmosphérique, mais on peut monter jusqu'à environ 10 bars absolus. De préférence, la réaction est menée entre 1 et 5 bars absolus.

### Le Réacteur

Le réacteur peut avoir un diamètre interne compris entre 1 et 6m, de préférence entre 2 et 5m. La hauteur utile du réacteur peut être comprise entre 1 et 10m, de préférence entre 3 et 7m. Ainsi, le volume réactionnel peut être compris entre 25 et 100 m³, de préférence entre 40 et 70 m³.

Le réacteur peut être équipé de moyens permettant l'agitation, par exemple de pales.

Ainsi, le réacteur peut comporter plusieurs étages d'agitation, de préférence deux étages d'agitation. Chaque étage d'agitation peut comporter plusieurs pales inclinées. De préférence, les pales sont positionnées dans le tiers inférieur du réacteur et dans le tiers supérieur du réacteur. Le diamètre des mobiles d'agitation est fonction du diamètre du réacteur. Généralement, le diamètre du mobile est compris entre 30 et 70% du diamètre du réacteur.

Le réacteur selon l'invention n'est pas un microréacteur.

Il est également possible d'utiliser plusieurs réacteurs disposés en cascade. Selon ce mode de réalisation, la réaction peut se dérouler dans au moins deux réacteurs disposés en cascade. De préférence, 3, 4 ou 5 réacteurs en cascade sont utilisés. Les réacteurs peuvent être de même volume ou bien de volume différent.

De préférence, l'agitation au niveau du premier réacteur est inférieure à l'agitation du second réacteur, et éventuellement du ou des réacteurs suivants.

Par agitation au sens de la présente invention, on entend la vitesse du flux du milieu réactionnel au sein du réacteur généré par le mouvement d'un mobile, tel qu'une pale, une ancre et tout autre mobile, éventuellement en présence d'une contre-pale, ou encore par un effet venturi. Pour un milieu agité par un mobile, l'agitation du milieu réactionnel peut être exprimée par la vitesse d'agitation du mobile lui-même.

Selon un mode de réalisation particulier de l'invention, lorsque le procédé utilise 2, 3 réacteurs ou plus, les réacteurs positionnés après le premier réacteur peuvent être agités à une vitesse identique. Il est également possible pour les réacteurs positionnés après le premier réacteur d'être agités à une vitesse croissante, c'est-à-dire que le troisième réacteur soit agité à une vitesse supérieure à la vitesse d'agitation du second réacteur.

L'agitation du milieu réactionnel peut être caractérisée par le nombre de Froude. Ce paramètre est connu de l'homme du métier. Il est notamment défini dans l'ouvrage : Le génie chimique à l'usage des chimistes de Joseph Lieto, édition Tec & Doc Lavoisier de 1998. Le nombre de Froude est calculé selon la formule suivante : Fr = N²D/g avec
g = accélération de la pesanteur, soit 9.81 m/secondes²
D =diamètre de l'agitateur en mètre,
N = nombre de rotation de l'agitateur en tours par secondes

Lorsque le procédé selon l'invention comporte 2 réacteurs ou plus, le nombre de Froude dans le premier réacteur peut être inférieur à 0.018 et le nombre de Froude dans le ou les réacteurs suivants peut être supérieur à 0.018. De préférence, le nombre de Froude dans le premier réacteur est strictement inférieur à 0.018 et le nombre de Froude dans le ou les réacteurs suivants est supérieur ou égal à 0.018. Plus préférentiellement, le nombre de Froude dans le premier réacteur est strictement inférieur à 0.010 et le nombre de Froude dans le ou les réacteurs suivants est strictement supérieur à 0.018.

L'introduction de la cétone peut se faire en fond de réacteur et l'introduction de la solution aqueuse de peroxyde d'hydrogène peut s'effectuer par une canne plongeant à l'intérieur du réacteur.

Cette étape de mélange conduit à la formation de l'azine.

En fin de réaction selon l'invention, le mélange réactionnel comprend l'azine, éventuellement la cétone n'ayant pas réagi, éventuellement le(s) activateur(s), et éventuellement d'autres sous-produits ou impuretés.

### Boucle de circulation de la solution aqueuse saturée en ammoniac

Selon un mode de réalisation de l'invention, la colonne d'absorption de l'étape a) peut être alimentée par un flux du milieu réactionnel du réacteur de l'étape b). Ce flux peut être prélevé à l'aide d'une tige plongeant dans le milieu réactionnel du réacteur. Il est ensuite introduit en tête de colonne d'absorption. Une fois introduit dans la colonne d'absorption, ce flux provenant du milieu réactionnel de l'étape b) est mélangé à la solution aqueuse comportant au moins un activateur, et à de l'ammoniac frais, et éventuellement à de l'ammoniac recyclé. En sortie de colonne, la solution aqueuse comprenant de l'ammoniac solubilisé en une proportion comprise entre 50% et 100% par rapport à la saturation de l'ammoniac dans de l'eau pure à la température de la colonne et comportant au moins un activateur est envoyée dans le réacteur. Cette boucle de circulation entre le réacteur et la colonne d'absorption permet de conserver de manière constante une teneur élevée d'ammoniac dans le milieu réactionnel de l'étape b). En d'autres termes, le flux prélevé dans le milieu réactionnel de l'étape b) va voir sa concentration en ammoniac augmentée en traversant la colonne d'absorption, avant d'être réinjecté dans le réacteur.

Lorsque l'agitation dans le réacteur est faible, c'est-à-dire lorsque l'agitation n'est pas suffisante pour homogénéiser le milieu réactionnel, la phase aqueuse a alors tendance à être présente en une plus grande concentration dans le fond du réacteur. Il est alors avantageux de prélever le milieu réactionnel riche en phase aqueuse à cet endroit pour l'introduire dans la colonne d'absorption. La tige de prélèvement est ainsi positionnée de préférence dans le premier tiers de la hauteur de phase liquide en partant du fond du réacteur.

Selon un mode de réalisation, lorsque le procédé utilise plusieurs réacteurs, le milieu réactionnel de chaque réacteur peut être prélevé et introduit dans la colonne d'absorption.

Selon un autre mode de réalisation, lorsque le procédé utilise plusieurs réacteurs, le milieu réactionnel d'un seul réacteur peut être prélevé et introduit dans la colonne d'absorption, par exemple le premier réacteur ou bien le dernier réacteur.

Selon encore un autre mode de réalisation, lorsque le procédé utilise plusieurs réacteurs, les milieux réactionnels de plusieurs réacteurs, mais pas tous les réacteurs peuvent être prélevés et introduits dans la colonne d'absorption.

### c) Séparation

Le procédé selon l'invention comprend, après la réaction de préparation de l'azine, une étape de séparation du flux formé à l'issu de l'étape b).

On sépare la phase aqueuse comprenant le ou les activateur(s) de la phase organique comprenant l'azine, et éventuellement l'alkylcétone n'ayant pas réagi, par des moyens classiques de séparation, tels que l'extraction liquide-liquide, la distillation, la décantation ou toute combinaison de ces possibilités. De préférence, la décantation est utilisée.

La phase organique obtenue peut comprendre l'azine, de l'alkylcétone n'ayant pas réagi, de(s) l'activateur(s), et éventuellement d'autres impuretés.

### Eventuel recyclage de la phase aqueuse

Suite à l'étape c) de séparation, la phase aqueuse peut subir, en tout ou partie, une étape de régénération et de concentration. Cette phase aqueuse ainsi régénérée et concentrée peut être recyclée dans la colonne d'absorption.

Lors de l'étape de régénération et de concentration de la phase aqueuse issue de l'étape de séparation, un flux d'ammoniac gazeux peut être séparé et recyclé dans la colonne d'absorption.

### Eventuel lavage de la phase organique

Le procédé peut comprendre une étape de lavage de la phase organique isolée à l'étape c). L'étape de lavage de la phase organique obtenue à l'étape c) est une étape pouvant être réalisée selon des techniques connues de l'homme du métier, comme indiqué par exemple dans le document WO 2018/065997 (p.13, « Organic layer processing section », second paragraphe). L'étape de lavage permet notamment de récupérer le(s) activateur(s), par exemple l'acétamide, qui serai(en)t encore présent(s) dans la phase organique.

Le lavage peut être effectué dans une colonne de lavage à contre-courant.

Le(s) activateur(s) pouvant encore être contenu(s) dans la phase organique passe(nt) ainsi dans la phase aqueuse de lavage.

Selon un mode de réalisation, après passage dans la colonne de lavage, la phase aqueuse résultante peut être recyclée à l'étape a) avec la phase aqueuse récupérée à l'étape c).

### Eventuelle distillation de la phase organique

Le procédé peut comprendre une étape de distillation de la phase organique isolée à l'étape c), et éventuellement lavée. L'étape de distillation de la phase organique, éventuellement lavée est une étape pouvant être réalisée selon des techniques connues de l'homme du métier, comme indiqué par exemple dans le document WO 2018/065997 (p.13, Organic layer processing section), notamment dans une colonne de distillation.

L'étape de distillation sert notamment à séparer l'azine des impuretés lourdes, à haut point d'ébullition. On récupère ces dernières en pied de colonne par exemple. L'étape de distillation sert également à séparer l'azine formée à l'étape (b) de l'alkylcétone n'ayant pas réagi, que l'on peut récupérer en tête de colonne. Il est possible de recycler l'alkylcétone ainsi récupérée à l'étape (b) de synthèse de l'azine.
Ainsi, à l'issue des étapes de lavage et de distillation, on obtient une phase organique purifiée, comprenant l'azine.

### d) Hydrolyse

Le procédé selon l'invention comporte une étape d'hydrolyse de la phase organique obtenue à l'étape précédente (purifiée ou non) pour obtenir de l'hydrate d'hydrazine.

L'étape d'hydrolyse s'effectue sous pression, dans une colonne à distiller réactive, dans laquelle sont injectées l'eau et la phase organique comprenant l'azine provenant de l'étape c) (purifiée ou non).

L'hydrolyse peut être effectuée dans une colonne de distillation à garnissage ou à plateaux, de préférence fonctionnant sous une pression de 2 à 25 bars absolus et avec une température de pied comprise entre 150°C et 200°C.

Bien que des colonnes classiques à garnissage puissent convenir, on utilise en général des colonnes à plateaux. Suivant le temps de séjour admis sur les plateaux et la pression, donc suivants les températures auxquelles on opère, le nombre de plateaux peut varier énormément. Dans la pratique, lorsqu'on opère sous une pression de 8 à 10 bars absolus, le nombre de plateaux nécessaires est de l'ordre de 40 à 70.

Suite à l'hydrolyse, on obtient :
- en tête, l'alkylcétone notamment sous forme d'un azéotrope avec l'eau, et
- en pied, une solution aqueuse d'hydrate d'hydrazine.

L'hydrolyse des azines est connue. Par exemple, E.C. GILBERT, dans un article dans le Journal of American Chemical Society vol.51, pages 3397-3409 (1929), décrit les réactions équilibrées de formation d'azine et les réactions d'hydrolyse de celle-ci et fournit les paramètres thermodynamiques du système dans le cas d'azines solubles dans l'eau. Par exemple, l'hydrolyse de l'azine de l'acétone est décrite dans le brevet US 4 724 133. S'agissant des azines insolubles dans les solutions aqueuses, comme par exemple l'azine de la méthyléthylcétone, l'hydrolyse doit être réalisée dans une colonne réactive, de telle sorte qu'en séparant continuellement la méthyléthylcétone en tête de colonne de distillation et l'hydrate d'hydrazine en pied de colonne, on peut parvenir à une hydrolyse totale.

Lorsqu'on travaille avec de l'azine pure, c'est-à-dire obtenue par exemple à partir d'hydrate d'hydrazine et de méthyléthylcétone, on constate effectivement en travaillant selon ces brevets, que l'on obtient avec un bon rendement des solutions diluées d'hydrate d'hydrazine.

Dans cette colonne, s'effectuent l'hydrolyse de l'azine et la séparation de l'hydrate d'hydrazine d'avec la méthyléthylcétone. Ces conditions sont connues. L'homme du métier détermine facilement le nombre de plateaux ou la hauteur de garnissage, ainsi que les points d'alimentation en azine et en eau. On obtient en pied des solutions à 20 % ou même jusqu'à 45 % en poids d'hydrate d'hydrazine. Par exemple, le rapport molaire eau/azine à l'alimentation de cette colonne est au moins supérieur à la stœchiométrie et avantageusement compris entre 5 et 30, de préférence entre 10 et 20. La température du pied de colonne peut être comprise entre 150°C et 200°C, de préférence entre 175°C et 190°C. La pression est fonction de la température d'ébullition de l'azine, de l'eau et de la cétone. Une telle hydrolyse est également décrite dans US 4 725 421 et dans WO 00/37357.

Le procédé selon l'invention peut être effectué en continu ou en batch. De préférence, il est effectué en batch.

### Description de la figure

La figure 1 représente un mode de réalisation du procédé selon l'invention.

La préparation de la solution aqueuse ammoniacale est réalisée dans la colonne d'absorption 1. La colonne 1 est alimentée en ammoniac frais par la conduite 2 et en solution aqueuse comportant au moins un activateur via la conduite 3.

La solution aqueuse ammoniacale comportant au moins un activateur alimente le réacteur R par la conduite 4.

La conduite 5, la colonne d'absorption 1, la conduite d'alimentation 4 et le réacteur R forment une boucle de re-circulation de la solution aqueuse comprenant de l'ammoniac solubilisé et de l'activateur.

La réaction de l'ammoniac, du peroxyde d'hydrogène et de l'alkylcétone en présence d'une solution comprenant au moins un activateur est réalisée dans le réacteur noté R.

Le réacteur R est alimenté en peroxyde d'oxygène par la conduite 6. Il est alimenté en cétone par la conduite 7. Il peut s'agir d'une alimentation en cétone fraiche ou bien une alimentation recyclant une cétone émanant du procédé.

La conduite 8 transporte le flux A formé dans le réacteur R vers le décanteur 9.

Le décanteur 9 sépare la phase organique B et la phase aqueuse C. La phase organique B est envoyée par la conduite 10 dans la colonne d'hydrolyse 16. L'eau est apportée par la conduite 17. L'hydrate d'hydrazine est récupéré par la conduite 18. Le flux de cétone et d'eau obtenu en tête de colonne suite à l'hydrolyse de l'azine dans la colonne d'hydrolyse 16 sort via la conduite 19.

La phase aqueuse C est envoyée vers l'unité 12 de régénération et de concentration de la phase aqueuse C par la conduite 11.

La conduite 13 est une conduite, qui court-circuite l'unité de régénération et de concentration 12. En fonction de la qualité de la phase aqueuse, il est possible d'orienter la phase aqueuse C vers l'unité 12 ou bien vers la conduite 13 de court-circuit. Il est également possible de n'envoyer vers l'unité de régénération et de concentration 12 qu'une partie de la phase aqueuse C. La phase aqueuse, qui a subi l'étape de régénération et de concentration et/ou la phase aqueuse, qui est passée via la conduite de court-circuit 13 est amenée en tête de la colonne d'absorption 1 via la conduite 3. Au cours de l'étape de régénération et de concentration, il est également possible de récupérer de l'ammoniac. Cet ammoniac peut être recyclé via la conduite 14 en pied de la colonne d'absorption 1. L'unité de régénération et de concentration 12 peut comporter une purge 15 afin d'éliminer du circuit l'eau excédentaire.

Les exemples, qui suivent permettent d'illustrer la présente invention, mais ne sont en aucun cas limitatifs.

### Exemples

### Exemple 1 : Mesure de la solubilité de l'ammoniac gaz dans la phase aqueuse

Plusieurs phases aqueuses comprenant des taux différents d'eau, d'acétate d'ammonium, d'acétamide et de MEC (méthyléthylcétone) ont été préparées. Ces phases aqueuses ont été saturées en ammoniac à la température indiquée par balayage d'ammoniac gaz à pression atmosphérique, sous agitation dans un réacteur muni d'un réfrigérant jusqu'à saturation du mélange, c'est-à-dire jusqu'à ce que l'ammoniac gaz ne soit plus absorbé et ressorte du réacteur. Le balayage a été ensuite continué encore 30 mn en réduisant le débit d'ammoniac. La teneur en ammoniac des phases aqueuses a été analysée par titrimétrie avec l'acide sulfurique 1N (1ml de prélèvement).

Une expérience a été menée à 50°C. Les résultats figurent dans le tableau 2 suivant :

**Tableau 2**

| T = 50°C | composition de la phase aqueuse (en g) | | | | Quantité de NH₃ en g dans 100g d'H₂O |
|---|---|---|---|---|---|
| Eau | Acétate d'Ammonium | Acétamide | MEC | NH₃ | |
| 81,6 | 0,0 | 0,0 | 0,0 | 18,4 | 22.5 |
| 61,5 | 26,3 | 0,0 | 0,0 | 12,2 | 19.9 |
| 37,2 | 55,7 | 0,0 | 0,0 | 7,1 | 19.1 |
| 52,8 | 0,0 | 35,2 | 0,0 | 12,0 | 22.7 |
| 45,4 | 18,1 | 27,2 | 0,0 | 9,3 | 20.5 |
| 21,7 | 31,8 | 25,1 | 16,7 | 4,7 | 21.6 |
| 26,2 | 34,4 | 22,9 | 11,5 | 5,1 | 19.5 |
| 29,3 | 39,9 | 20,0 | 5,0 | 5,9 | 20.2 |
| 31,2 | 48,6 | 13,9 | 0,0 | 6,3 | 20.2 |

Une seconde expérience a été menée à 60°C. Les résultats figurent dans le tableau 3 suivant :

**Tableau 3**

| 60°C | composition de la phase aqueuse (en g) | | | | Quantité de NH₃ en g dans 100g d'H₂O |
|---|---|---|---|---|---|
| Eau | Acétate d'ammonium | Acétamide | MEC | NH₃ | |
| 86,8 | 0,0 | 0,0 | 0,0 | 13,2 | 15.2 |
| 63,8 | 27,4 | 0,0 | 0,0 | 8,8 | 13.8 |
| 37,9 | 56,8 | 0,0 | 0,0 | 5,3 | 14.0 |
| 54,7 | 0,0 | 36,4 | 0,0 | 8,9 | 16.3 |
| 46,5 | 18,6 | 27,9 | 0,0 | 7,0 | 15.1 |
| 29,7 | 40,5 | 20,2 | 5,1 | 4,6 | 15.5 |
| 31,8 | 49,4 | 14,1 | 0,0 | 4,7 | 14.8 |

On voit que les teneurs en ammoniac à saturation dans les phases aqueuses sont proches des valeurs de solubilité de l'ammoniac dans l'eau pure, si l'on ramène la quantité d'ammoniac à la quantité d'eau contenue dans ces phases aqueuses, soit 23.5 g/100g à 50°C et 16.8 g/100g à 60°C comme indiqué par le *Lange's Handbook of Chemistry.*

### Exemple 2 : Procédé selon l'invention

### Description du montage réactionnel : étapes a) et b)

Le réacteur de 1000 ml est muni d'une double enveloppe permettant de chauffer pour maintenir la température de la réaction à la température désirée. Il est agité par un mobile composé de trois pales droites en verre de 4 cm de diamètre. Un réfrigérant maintenu à 5°C par circulation d'eau glycolée est monté sur le réacteur. Le réfrigérant est relié à un dispositif de bulle à bulle rempli d'huile silicone, ce qui permet de suivre le dégagement gazeux et de maintenir la réaction à pression atmosphérique.

La colonne d'absorption est une colonne en verre d'environ 2 cm de diamètre interne et remplie sur environ 10cm de hauteur par des billes de verre d'environ 2mm de diamètre. La double paroi est maintenue à une température de 25 à 30°C à l'aide d'une circulation d'eau via un bain thermostaté. Un équilibrage de pression en phase gaz est réalisé entre le ciel du réacteur et le haut de la colonne d'absorption.

L'ammoniac gaz est injecté en pied de la colonne d'absorption par un débitmètre massique réglable. Le débit d'ammoniac est diminué si l'on constate que le dégagement gazeux au niveau du bulle à bulle s'intensifie.

La recirculation de la phase aqueuse du réacteur vers la colonne d'absorption est assurée par une pompe péristaltique, la phase aqueuse prélevée dans le réacteur est injectée en tête de la colonne d'absorption. Le prélèvement dans le réacteur de la phase aqueuse recirculée est effectué à peu près au premier tiers de la hauteur de phase liquide en partant du fond du réacteur.

La phase aqueuse ammoniacale est introduite par le haut du réacteur, au-dessus de la phase liquide du réacteur. Le peroxyde d'hydrogène est également introduit par le haut du réacteur, au-dessus de la phase liquide du réacteur.

### Mode opératoire :

On introduit dans le réacteur les constituants de la phase aqueuse, soit la MEC, l'eau, l'acétamide et l'acétate d'ammonium. L'agitation est démarrée et on porte la température du milieu à la température réactionnelle souhaitée. La pompe assurant la recirculation de la phase aqueuse est également démarrée.

Les réactifs sont introduits dans les proportions figurant dans le tableau 4 suivant :

**Tableau 4**

| | Quantité (g) | Quantité (moles) |
|---|---|---|
| MEC | 144 | 2 |
| Eau | 180 | 18 |
| Acétamide | 177 | 3 |
| Acétate d'ammonium | 77 | 1 |

Le peroxyde d'hydrogène est une solution aqueuse commerciale à 70%.

L'agitation du milieu réactionnel est fixée à 100 tours/minutes.

Lorsque la température réactionnelle de 50°C dans le réacteur est atteinte, on démarre alors simultanément l'introduction de l'ammoniac frais et l'introduction de l'H₂O₂. On coule 48.6 g d'une solution H₂O₂ à 70% sur une durée d'une heure, soit un débit de 1 mole/h en H₂O₂.

Le débit d'ammoniac est réglé à t = 0 sur 31.8 g/h, soit 1.87 moles par heure, il est ensuite ajusté pendant la réaction de manière à ne pas avoir d'ammoniac excédentaire en sortie du dispositif bulle à bulle.

La teneur en ammoniaque en sortie de colonne et dans la phase aqueuse a été analysée par titrimétrie avec l'acide sulfurique 1N (1ml de prélèvement).

Le pourcentage de solubilisation d'ammoniac dans la solution aqueuse en sortie de colonne est calculé par rapport à la valeur d'ammoniaque dans l'eau pure à 30°C selon les valeurs du tableau Lange's Handbook of Chemistry, Editor Jonh A. Dean, 12e édition, 1979, en page 10.3*,* c'est-à-dire par rapport à la valeur de 41,0 g.

Le débit du flux dans la boucle de recirculation est de 370 g/h.

Un prélèvement est effectué pour déterminer le taux de MECazine dans le réacteur.

Le rendement en MECazine est calculé selon le calcul suivant : nombre de moles d'azine formée / nombre de moles d'azine théorique (soit 1 mole par mole d'H₂O₂).

Les données de la réaction figurent dans le tableau 5 ci-dessous :

**Tableau 5**

| temps (h) | débit NH₃ (moles/h) | NH₃ introduit cumul (g) | Rendement MECazine (%) | NH₃ g/100g d'eau dans le réacteur | NH₃ g/100g d'eau en sortie de colonne | % Solubilisation de NH₃ à 30°C |
|---|---|---|---|---|---|---|
| 0 | 1.87 | 0 | 35 | - | - | - |
| 2 | 0.47 | 63.5 | 67 | - | 35 | 85 |
| 4 | 0.12 | 79.5 | 79 | - | - | - |
| 5.8 | 0.06 | 83 | 86 | - | 27 | 66 |
| 8 | arrêt | 85.2 | - | 22.5 | 26 | 63 |

### Description du montage réactionnel : étape c)

La MECazine est récupérée après une étape de décantation.

### Description du montage réactionnel : étape d)

L'appareillage consiste en une colonne à distiller de 2.5m de hauteur et de diamètre 20 mm garnie d'anneaux Raschig (diamètre 5mm), elle est munie de capteurs de température à plusieurs endroits le long de la colonne. La colonne est munie en tête d'un condenseur et un dispositif permettant de régler le débit de condensat retourné en tête de colonne et de condensat soutiré. Le taux de reflux est réglé par un dispositif de timer (rapport massique du débit de reflux sur débit soutiré).

Le bouilleur en pied de colonne possède un volume de 160 mL, est muni d'un dispositif permettant de visualiser le niveau de liquide. Un soutirage manuel sur le bouilleur permet de soutirer la solution d'hydrate d'hydrazine produite et garder le niveau de liquide sensiblement constant dans le bouilleur.

Les introductions d'eau et de MECazine sont effectuées par des pompes dans le premier tiers de la colonne en partant du haut.

L'ensemble du montage est prévu pour travailler sous la pression de travail désirée (8 bars absolus) et est muni d'un joint d'éclatement de 12 bars par mesure de sécurité.

### Mise en conditions de la colonne

On introduit dans le bouilleur une solution d'hydrate d'hydrazine à 25% en hydrate d'hydrazine (N₂H₄,H₂O) et l'on monte progressivement la température de pied jusqu'à ce que les vapeurs d'eau arrivent dans le haut de la colonne. La pression est réglée à 8 bars absolues.

### Hydrolyse de l'azine

On démarre alors simultanément les introductions de l'eau à un débit de 36g/h (2 moles/h) et de la méthyléthylcétone azine à un débit de 28g/h (0.2 moles/h). Lorsque la colonne se met en équilibre, on règle alors le taux de reflux en tête de colonne à 0.5 et on soutire en continu en pied l'hydrate d'hydrazine afin de maintenir un niveau constant dans le bouilleur.

L'opération est menée sur environ 8h de fonctionnement. La température de pied est de 178-177°C et la température de tête est de 150-151 °C.

Durant l'opération on soutire ainsi 31 g/h d'une solution aqueuse titrant 31% en hydrate d'hydrazine (exprimé en N₂H₄,H₂O) en pied de colonne. En tête on soutire 32g/h de méthyléthylcétone contenant 12% d'eau.

### Exemple 3 : Procédé selon l'invention

Le procédé de l'exemple 3 suit le même procédé que celui de l'exemple 2, seul le débit du flux dans la boucle de recirculation est modifié : il est doublé.

Les données de la réaction figurent dans le tableau 6 ci-dessous :

**Tableau 6**

| temps (h) | débit NH₃ (moles/h) | NH₃ introduit cumul (g) | Rendement MECazine (%) | NH₃ g/100g d'eau dans le réacteur | NH₃ g/100g d'eau en sortie de colonne | % Solubilisation de NH₃ à 30°C |
|---|---|---|---|---|---|---|
| 0 | 1.87 | 0.0 | 35 | - | - | - |
| 2 | 0.47 | 63.6 | 67 | - | 26 | 63 |
| 4 | 0.16 | 79.5 | 79 | - | - | - |
| 5.8 | 0.08 | 84.2 | 86 | - | 24 | 59 |
| 8 | arrêt | 87.2 | - | 21.5 | 22 | 54 |

Ces résultats montrent l'obtention d'un très bon rendement, avec une consommation en ammoniac optimum.

## Revendications

1. Procédé de préparation d'hydrate d'hydrazine, comprenant les étapes successives suivantes :
a) préparation au moyen d'une colonne d'absorption d'une solution aqueuse comportant de l'ammoniac solubilisé en une proportion comprise entre 50% et 100% par rapport à la saturation de l'ammoniac dans de l'eau pure à la température de la colonne et comportant au moins un activateur, par introduction dans la colonne d'absorption d'une solution aqueuse comprenant au moins un activateur et d'ammoniac frais ; puis
b) réaction au sein d'au moins un réacteur de la solution aqueuse d'ammoniac comportant au moins un activateur obtenue à l'étape précédente avec du peroxyde d'hydrogène et une cétone de formule R₁R₂CO, les groupes R₁ et R₂ désignant indépendamment l'un de l'autre un groupe méthyle, éthyle, propyle, butyle, pentyle, hexyle, heptyle et octyle ; puis
c) séparation de la phase organique contenant l'azine de la phase aqueuse à partir du flux formé à l'issu de l'étape précédente ; puis
d) hydrolyse de la phase organique obtenue à l'étape précédente pour obtenir de l'hydrate d'hydrazine.

2. Procédé selon la revendication 1, **caractérisé en ce que**, à l'étape a), la solution aqueuse comprenant au moins un activateur est introduite en tête de la colonne d'absorption et l'ammoniac frais est introduit à contre-courant, de préférence en bas de la colonne d'absorption.

3. Procédé selon la revendication 1 ou 2, **caractérisé en ce qu'**un flux du milieu réactionnel du réacteur de l'étape b) alimente la colonne d'absorption de l'étape a), ce flux étant injecté en tête de la colonne.

4. Procédé selon l'une quelconque des revendications précédentes, **caractérisé en ce que** la solution aqueuse isolée à l'étape c) est recyclée dans la colonne d'absorption de l'étape a).

5. Procédé selon l'une quelconque des revendications précédentes, **caractérisé en ce que** la colonne d'absorption de l'étape a) est alimentée par un ou des flux d'ammoniac recyclé au sein du procédé.

6. Procédé selon l'une quelconque des revendications précédentes, **caractérisé en ce que** la cétone utilisée à l'étape b) est la méthyléthylcétone.

7. Procédé selon l'une quelconque des revendications précédentes, **caractérisé en ce qu'**il comprend une étape de régénération et de concentration de la phase aqueuse issue de l'étape de séparation c).

8. Procédé selon l'une quelconque des revendications précédentes, **caractérisé en ce qu'**il comprend une étape de lavage de la phase organique, issue de l'étape de séparation c).

9. Procédé selon l'une quelconque des revendications précédentes, **caractérisé en ce que** le procédé se fait en batch.

10. Procédé selon l'une quelconque des revendications 1 à 8, **caractérisé en ce que** le procédé se fait en continu.

## Patentansprüche

1. Verfahren zur Herstellung von Hydrazinhydrat, umfassend die folgenden aufeinanderfolgenden Schritte:
a) Herstellen, mittels einer Absorptionssäule, einer wässrigen Lösung, umfassend lösliches Ammoniak in einer Menge zwischen 50 % und 100 %, bezogen auf die Sättigung von Ammoniak in reinem Wasser bei der Temperatur der Säule, und mindestens einen Aktivator, durch Einleiten, in die Absorptionssäule, einer wässrigen Lösung, umfassend mindestens einen Aktivator und frisches Ammoniak; dann
b) Reagieren, in mindestens einem Reaktor, der in dem vorherigen Schritt erlangten wässrigen Ammoniaklösung, umfassend mindestens einen Aktivator, mit Wasserstoffperoxid und einem Keton von Formel R₁R₂CO, wobei die Gruppen R₁ und R₂ unabhängig voneinander eine Methyl-, Ethyl-, Propyl-, Butyl-, Pentyl-, Hexyl-, Heptyl- und Octyl-Gruppe bezeichnen; dann
c) Abtrennen der Azin-haltigen organischen Phase von der wässrigen Phase aus dem in dem vorherigen Schritt gebildeten Strom; dann
d) Hydrolysieren der in dem vorherigen Schritt erlangten organischen Phase, um Hydrazinhydrat zu erlangen.

2. Verfahren nach Anspruch 1, **dadurch gekennzeichnet, dass** in Schritt a) die wässrige Lösung, die mindestens einen Aktivator umfasst, an dem Kopf der Absorptionssäule eingeleitet wird und das frische Ammoniak in Gegenstrom, vorzugsweise am Boden der Absorptionssäule, eingeleitet wird.

3. Verfahren nach Anspruch 1 oder 2, **dadurch gekennzeichnet, dass** ein Strom des Reaktionsmediums aus dem Reaktor von Schritt b) die Absorptionssäule von Schritt a) speist, wobei dieser Strom am Kopf der Säule eingespritzt wird.

4. Verfahren nach einem der vorherigen Ansprüche, **dadurch gekennzeichnet, dass** die in Schritt c) isolierte wässrige Lösung in die Absorptionssäule von Schritt a) zurückgeführt wird.

5. Verfahren nach einem der vorherigen Ansprüche, **dadurch gekennzeichnet, dass** die Absorptionssäule in Schritt a) mit einem oder mehreren Strömen von Ammoniak gespeist wird, das innerhalb des Verfahrens zurückgeführt wird.

6. Verfahren nach einem der vorherigen Ansprüche, **dadurch gekennzeichnet, dass** das in Schritt b) verwendete Keton Methylethylketon ist.

7. Verfahren nach einem der vorherigen Ansprüche, **dadurch gekennzeichnet, dass** es einen Schritt eines Regenerierens und Konzentrierens der wässrigen Phase aus dem Trennschritt c) umfasst.

8. Verfahren nach einem der vorherigen Ansprüche, **dadurch gekennzeichnet, dass** es einen Schritt eines Waschens der organischen Phase, die aus dem Trennschritt c) stammt, umfasst.

9. Verfahren nach einem der vorherigen Ansprüche, **dadurch gekennzeichnet, dass** das Verfahren in einem Chargen-Verfahren durchgeführt wird.

10. Verfahren nach einem der Ansprüche 1 bis 8, **dadurch gekennzeichnet, dass** das Verfahren kontinuierlich durchgeführt wird.

## Claims

1. Process for preparing hydrazine hydrate, comprising the following successive steps:
a) preparation by means of an absorption column of an aqueous solution comprising dissolved ammonia in a proportion of between 50% and 100% relative to the saturation of ammonia in pure water at the temperature of the column and comprising at least one activator, by introduction into the absorption column of an aqueous solution comprising at least one activator and of fresh ammonia; then
b) reaction within at least one reactor of the aqueous ammonia solution comprising at least one activator obtained in the preceding step with hydrogen peroxide and a ketone of formula R₁R₂CO, the groups R₁ and R₂ denoting, independently of one another, a methyl, ethyl, propyl, butyl, pentyl, hexyl, heptyl and octyl group; then
c) separation of the organic phase containing the azine from the aqueous phase from the stream formed on conclusion of the preceding step; then
d) hydrolysis of the organic phase obtained in the preceding step to obtain hydrazine hydrate.

2. Process according to Claim 1, **characterized in that**, in step a), the aqueous solution comprising at least one activator is introduced at the top of the absorption column and the fresh ammonia is introduced in countercurrent, preferably at the bottom of the absorption column.

3. Process according to Claim 1 or 2, **characterized in that** a stream of the reaction medium of the reactor of step b) feeds the absorption column of step a), this stream being injected at the top of the column.

4. Process according to any one of the preceding claims, **characterized in that** the aqueous solution isolated in step c) is recycled into the absorption column of step a).

5. Process according to any one of the preceding claims, **characterized in that** the absorption column of step a) is fed with one or more streams of ammonia that has been recycled within the process.

6. Process according to any one of the preceding claims, **characterized in that** the ketone used in step b) is methyl ethyl ketone.

7. Process according to any one of the preceding claims, **characterized in that** it comprises a step of regenerating and concentrating the aqueous phase from the separation step c).

8. Process according to any one of the preceding claims, **characterized in that** it comprises a step of washing the organic phase, from the separation step c).

9. Process according to any one of the preceding claims, **characterized in that** the process is carried out batchwise.

10. Process according to any one of Claims 1 to 8, **characterized in that** the process is carried out continuously.
